# EUROPEAN PATENT APPLICATION

(11) **EP 1 178 259 A2**
(43) Date of publication of application: **06.02.2002**
(21) Application number: 01402053.1
(22) Date of filing: 30.07.2001
(51) Int. Cl.: F17C 13/02

(54) **Management system of gas-filled containers**

(30) Priority: 01.08.2000 JP 2000232742
(71) Applicant: L'AIR LIQUIDE, SOCIETE ANONYME POUR L'ETUDE ET L'EXPLOITATION DES PROCEDES GEORGES CLAUDE, 75321 Paris Cédex 07 (FR)
(72) Inventor: Miyashita, Kazuhiko, c/o Harima Technical Center, Kako-gun, Hyogo-ken (JP)
(74) Representative: Ducreux, Marie

(57) **Abstract**

The present invention is directed toward a container and product information management system for the inventory, identification, and distribution of containers filled with compressed and/or liquified gas. The inventive system is effected through a distributed system of processors, displays, input devices, output devices, and communication devices whereby gas product and customer information is maintained at a central location and is distributed to and is available by a plurality of remote locations, each remote location preferably located proximate to a storage facility for gas-filled containers. Upon the filling of each container with a compressed gas, a product label is affixed to the container identifying, at a minimum, the gas and the container. The filled containers are routed to one or more warehouses to await ultimate shipment to an end user or customer. Upon receiving a customer order for gas at a warehouse, the containers satisfying the customer order are identified through the inventive system. Additional product labels are printed at the warehouse based on information input at the warehouse and gleaned from data stored centrally and are affixed to the containers prior to shipment to the customer.

## Description

### Field of the Invention

The present invention relates to the management of information related to compressed gas products and, more specifically, to a system for the management of containers filled with compressed gas and the customized creation of product labels to be affixed to the containers accurately identifying the gas contained therein and the user to which the container has been sold.

### Description of the Related Art

The manufacture, distribution, sale, and use of a wide variety of compressed gases have increased in recent years as more uses are found for these products and as methods and containers are developed to safely and economically store and transport the gases in compressed, and, therefore, reduced volume form. Examples of such gases include oxygen for both health and welding purposes, propane for the increasing numbers of residential gas barbeque grills, liquid nitrogen for cryogenic processing, and helium for lighter-than-air applications.

The containers used to house and transport these gases are labeled with a wide variety of product labels that are a function of not only the gas in the container but also the manufacturer who filled the containers and a host of state and national regulations governing the handling of compressed-gas containers and the gases contained therein. Additionally, users and customers have demanded different product labels to be used on the containers, even for the same gas. The result has been a plurality of differently labeled containers for a single gas, with each such labeled container(s) requiring separate handling and storage as if it contained a different gas from the other containers. Therefore, the space required to store gas containers in the warehouses increases, as does the total number of containers in the entire manufacture and distribution cycle. Also, such a system of custom labeling exacerbates the difficulty in easily identifing a particular gas by its container labeling. Further, in the case of gases which must comply with stringent quality control standards, such as for use in semiconductor manufacturing, product labels can dictate the content and manufacturing requirements for the gas. As such, the product labels can also serve as an instructional guide and an analysis table for filling the containers with the proper gas.

Following the filling and labeling of the gas containers at a point of collection or manufacture, the pressurized, gas-filled containers are typically routed to a warehouse for storage and ultimate distribution to end-user customers. Upon being purchased by a customer, the gas-filled container(s) must be located in the warehouse, pulled from the warehouse shelves, and shipped to the customer. If the product is not found to be available in a particular warehouse, other warehouses must be searched to locate the ordered product for shipment. In the event that no warehouse has sufficient product for delivery to the customer, then additional containers of the gas must be filled at the place of manufacture and shipped directly to the customer or, alternatively, shipped first to the warehouse and then to the customer.

To efficiently and timely provide gas-filled containers to the customers upon order, it is necessary to accurately keep track of the particular gases and containers stocked at each warehouse. However, this task is rendered exponentially complex because of the multiple product labels used on the containers and the multiple locations for stocking the containers. To the knowledge of the inventor, no system is available to automatically track and maintain the myriad of gas-filled containers that are stocked in present day warehouses or to produce the myriad of product labels required to satisfy the requirements for custom labeling of gas-filled containers.

These and other drawbacks, problems, and limitations of conventional products are overcome according to exemplary embodiments of the present invention

### SUMMARY OF THE INVENTION

The present invention is directed toward a container and product information management system for the inventory, identification, and distribution of containers filled with compressed and/or liquified gas. The inventive system is effected through a distributed system of processors, displays, input devices, output devices, and communication devices whereby gas product and customer information is maintained at a central location and is distributed to and is available by a plurality of remote locations, each remote location preferably located proximate to a storage facility for gas-filled containers. Upon the filling of each container with a compressed gas, a product label is affixed to the container identifying, at a minimum, the gas and the container. The filled containers are routed to one or more warehouses to await ultimate shipment to an end user, or customer. Upon receiving a customer order for gas at a warehouse, the containers satisfying the customer order are identified through the inventive system. Additional product labels are printed at the warehouse based on information input at the warehouse and gleaned from data stored centrally and are affixed to the containers prior to shipment to the customer.

In accordance with one aspect of the present invention, a system and method are directed toward managing the labeling of gas-filled containers, including inputting container-related information; inputting user-related information; inputting user order information on a terminal side; selecting gas-filled containers satisfying the input user order; transmitting to a host side information identifying the selected containers and information identifying the user submitting the order; composing container labels on the host side based on the transmitted information; and printing container labels for each of the selected containers from the composed container labels.

In accordance with another aspect of the present invention, a system and method are directed toward managing the labeling of gas-filled containers, including inputting container-related information; inputting user-related information; inputting user order information on a terminal side; selecting gas-filled containers satisfying the input user order; composing container labels on the terminal side based on the input container-related information, the user-related information, and the user order information; and printing container labels for each of the selected containers from the composed container labels.

### BRIEF DESCRIPTION OF THE DRAWINGS

These and other objects and advantages of the present invention will become more apparent and more readily appreciated from the following description of the preferred embodiments, taken in conjunction with the accompanying drawings, wherein like reference numerals have been used to designate like elements, and wherein:
Figure 1 shows a component diagram of the management system configured in accordance with an exemplary embodiment of the present invention;
Figure 2 shows a block flow chart of an embodiment of the present invention including an exemplary method for managing gas-filled containers through the creation of product labels;
Figure 3 shows a block flow chart of an embodiment of the present invention including another exemplary method for managing gas-filled containers through the creation of product labels;
Figure 4 shows a block flow chart of an embodiment of the present invention including yet another exemplary method for managing gas-filled containers through the creation of product labels.

### DETAILED DESCRIPTION OF THE PREFERRED EMBODIMENTS

In the following description, for purposes of explanation and not limitation, specific details are set forth in order to provide a thorough understanding of the present invention. However, it will be apparent to one skilled in the art that the present invention may be practiced in other embodiments that depart from these specific details. In other instances, detailed descriptions of well-known methods, devices, and circuits are omitted so as not to obscure the description of the present invention.

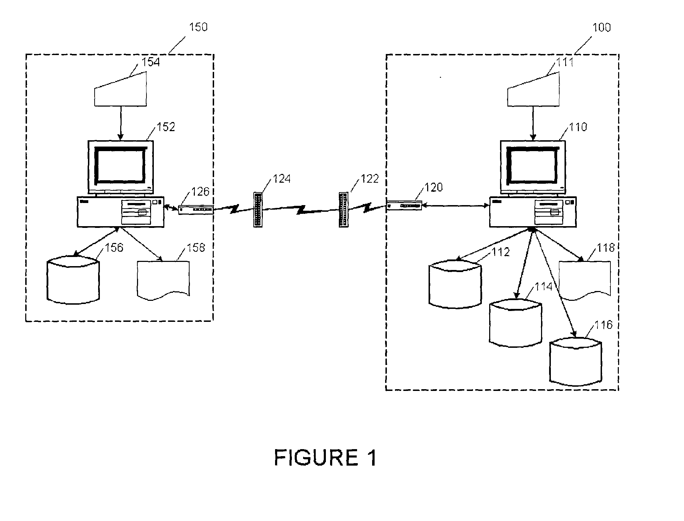

Referring initially to Figure 1, there is illustrated a component diagram of a preferred embodiment of the present invention will be described. The management system according an embodiment of the present invention comprises an information processing unit 110 on a host side 100 and an information processing unit 152 on each of one or more terminal sides 150. Communication devices 120 - 126 are in place within the inventive management system that are capable of transmitting and receiving information between the information processing unit 110 on the host side 100 and the plurality of information processing units 152 on the terminal sides 150.

The host side 100 is typically located at the point of processing, or the filling location, for the gas canisters. Alternatively, the host side 100 can be represented at the headquarters location for the business entity responsible for the filling of the canisters with compressed and/or liquified gas. Each of the information processing units 152 on the terminal sides 150 are given a unique terminal ID or address by which communications can be uniquely established between the host's information processing unit 110 and each terminal's information processing unit 152. The information processing unit 110 on the host side 100 is comprised of a processor, such as a personal computer, a display, an input device 111, an output device 118, memory or storage devices 112 - 116, and a communication port 120. Correspondingly, each information processing unit 152 on the terminal side 150 is comprised of a processor, such as a personal computer, a display, an input device 154, an output device 158, a memory or storage device 156, and a communication port 126.

Each information processing unit 152 on the terminal side 150 is located proximate to a warehouse where the gas-filled containers are stocked or stored after having been filled or "manufactured." The communication devices 120 - 126 that provide information communication between the host's information processing unit 110 and the terminals' information processing units 152 are comprised of typical and known components for interprocessor communications, whether land-based or wireless, including communication ports 120 & 126, modems, telephone lines, intranets, Internet, and local area networks. One of any number of known communication control programs is used to effect and facilitate the communication between the respective information processing units 110 & 152; and in the case where an analog line is used, a modulator or the like can be used. The communication devices 120 - 126 enable information to be transmitted, received, and retrieved between the information processing units 110 & 152 on demand of either the host side 100 or the terminal side 152 to the extent of the authority permitted within the present inventive management system. The communicated information comprises container-related information and user-related information, as discussed more thoroughly below. In particular, the communication devices 120 - 126 are designed to transmit container-related information stored in the memory device 112 on the host side 100 to the terminal side 150 on the basis of predetermined values corresponding to elapsed time, manufacture of a new batch of filled containers, a new customer order, or the like, thereby over-writing at any time the container-related information stored in the memory device 156 on the terminal side 150. The various memory devices 112, 114, 116, and 156 can be resident within the respective information processing units 110 and 152 or can be separate devices connected electronically to the processing units 110 and 152. Additionally, the memory devices for storing data and information relevant to the present inventive management system can be organized as simple files, sequential databases, hierarchical databases, and the like without detracting from the inventive features of the present invention.

The information processing unit 110 on the host side 100 is configured to permit the input of information relating to the myriad of containers or canisters that are available at the manufacturing site to be filled with gas (hereinafter referred to as "container information"), information relating to each of the plurality of gases that can be utilized to fill each and any of the containers (hereinafter referred to as "gas information"), and information related to the physical location or destination of each gas-filled containers (hereinafter referred to as "location information"). Each of these three categories of information is input through a typical input device 111 and is stored as container-related information in the memory device 112 of the host's information processing unit 110 after being processed by the processor for accuracy, integrity, and proper fields of information.

The container information is information relating to the containers that are available on the manufacturing site to be filled with a gas. This information includes a unique container code or ID for each container, the type of valve on the container, the specifications of the container (size, composition material, and treatment of the inner surface), and container product name. Since container code is convenient for identifying a container, this information field is usually used to identify and refer to a particular container. Within the gas industry, container code is typically composed of combination of the container size and the container number.

The gas information is information relating to the gas used to fill a container. This information includes gas kind, manufacturing (the date the container was filled with the gas), and content data (filling pressure, gas purity, content of impurities, etc.) which are required for product labeling. The gas kind information is typically the chemical designation for the gas, such as O₂ for oxygen, CO₂ for carbon dioxide, and N for liquid nitrogen. Alternatively, the gas kind can be any recognized uniform coding so as ease the identification and picking of the gas container from a warehouse location. Although the application of product labels to gas-filled containers is required for special gases such as gases for use in the manufacture of semiconductors, the present invention is applicable to not only these special gases, but also to general purpose gases (including liquefied gases).

The location information of containers is information indicative of the place where each of containers exists or is being shipped, including the location and/or code of the manufacturing site and the warehouse where the canister is stocked or is destined to be stored. This information can also include the name and/or code of the user ordering the gas.

The input device 111 is further configured to permit the input of user information, user-specific product label form information, and user-specific container information. All of this information is stored as user-related information in the memory device 112 of the host's information processing unit 110 after being processed and verified by the processor for accuracy, integrity, and proper fields of information. Additionally, once verified by the processor, the user-related information is also transmitted to the information processing unit 152 on the terminal side 150 via the communication devices 120 - 126 for storage in the memory device 156. Further, as user-related information is input to the information processing unit 110 on the host side 100 in the form of updated or new information, the information is also transmitted to the terminal sides' information processing unit 152 to keep the user-related information stored on the memory device 156 up to date. Alternatively, container-related and user-related information can be input to the information processing unit 110 on the host side 100 from an exterior source (not shown) via the communication devices 122 and 120. Correspondingly, the user-related information can be received by the information processing unit 152 on the terminal side 150 from an external source (not shown) via the communication devices 124 and 126.

The user information is information relating to users or customers who are the end purchasers or users of the gas-filled containers. This information includes the name of the user, user code, user address, guaranteed life requirements for a filled gas, and required gas product quality values.

The user-specific product label information is user-specified information that is to be printed on the product label to be affixed to each container purchased by a particular user and includes such information as the name of a user, product quality values, product description, and purchase order. The user-specific container information is user-specified criteria for the type and size of container to be utilized for filling with gas and for fulfilling a particular user order.

A primary management process of the present invention is the creation and printing of custom product labels to be affixed to the gas-filled containers just prior to the shipment of the containers to a user. According to preferred embodiments of the present invention, management of the location of each container; management of the distribution route of the containers; management of the kinds of containers used, stored, and shipped; management of filling gases for the containers; management of each user's container consumption frequency; and management of empty containers can be performed in combination with the wealth of user, container, gas, location, and label information available to the inventive system. By virtue of the memory devices 112, 114, and 156 available to the system and the communication devices 120 - 126 connecting the host side 100 and the terminals sides 150, various information controls, displays, and output devices can be executed on the host side 100 or on the terminal side 150, with proper authorization controls implemented through the management system programs and software directing the information processing units 110 and 152.

At the host side 100, containers are filled with gas, either in direct response to user orders or to maintain an inventory of gas-filled containers in anticipation of customer orders. Based on the information maintained as container-related information in memory device 112 and user-related information in memory device 114, a product label is printed on the host side 100 via the output device 118 for each container filled with gas and affixed to the container before, during, or at the end of the filling process. Each gas-filled container is so labeled to identify the container, its contents, and its owner. Alternatively, each pallet or grouping of containers can be so labeled instead of individual containers. After filling and labeling, the containers are routed to the respective warehouses for storage until shipment to users.

After the container-related information in memory device 112 and the user-related information in memory device 114 are read out in accordance with the management system software, as mentioned above, for processing information controls and are subjected to various kinds of arithmetic operations and outputting (i.e. displaying and printing out), the information can be stored, as need requires, as secondary information in the memory device 116 of the information processing unit 110 on the host side 100. Additionally, this secondary information is accessible by the information processing unit 152 on the terminal side 100 via the communication devices 120 - 126.

The components of Figure 1 are intended to be exemplary rather than limiting regarding the devices and data or communication pathways that can be utilized in the present inventive system. Each of the information processing units 110 and 152 can contain one or multiple processors to effect the specific features of the present invention. Correspondingly, the various memory and storage devices 112, 114, 116, and 156 can be expanded to multiple devices or, in the case of memory devices 112 - 116, can be consolidated into a single device without detracting from the inventive features of the present management system. In the same vein, the input devices 111 and 154 and the output devices 118 and 158 can comprise multiple first, second, third, etc. input and output devices within the inventive features of the present system.

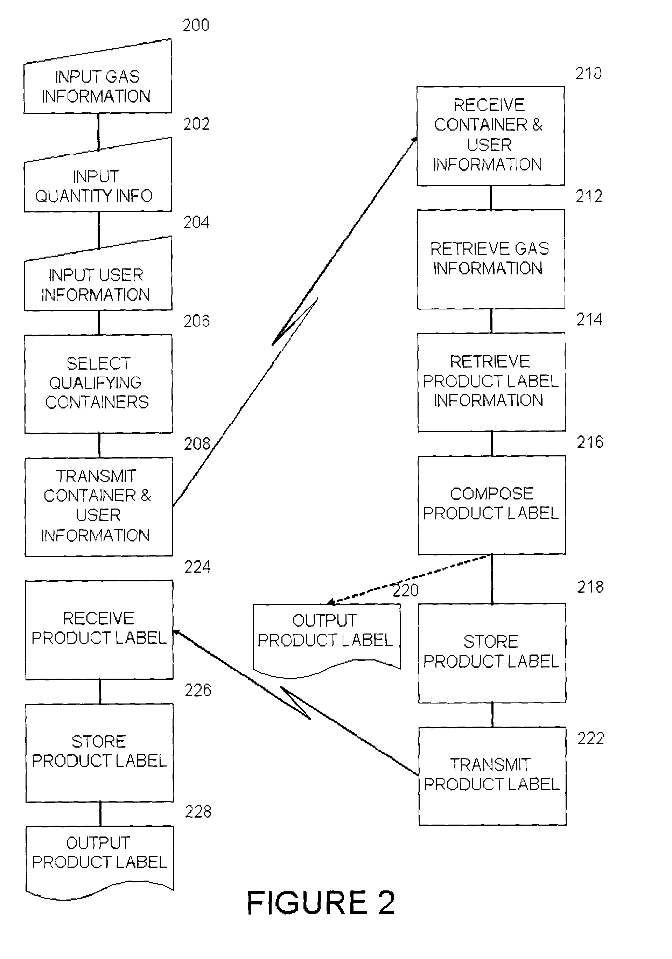

Referring now to Figure 2, a preferred embodiment of the present inventive management system will be described. This embodiment provides for processing primarily executed on the terminal side 150 and partially executed on the host side 100, and for utilizing information which has been previously received from the host's information processing unit 110 by the terminal's information processing unit 152 and stored in the memory device 156. In this embodiment, gas-filled containers stocked at the terminal side 150 are retrieved from a warehouse, container product labels are composed on the host side 100 by utilizing the information which has been previously received by and stored at the information processing unit 110 on the host side 100, and the container product labels are output on the terminal side 150.

At step 200, information for identifying a gas which a user demands or has ordered is input through the input device 154 on the terminal side 150, wherein the kind of gas and a gas code corresponding thereto are typically input. The quantity of the gas which a user demands is input at step 202 in the form of the number of containers, the gas weight, the gas volume, etc. In the present invention, it is not always necessary to input the quantity of gas where the user may have a required quantity of a gas already input as user information and stored as user-related information on memory device 114. Furthermore, the inventive system is designed to select a proper number of containers from the retrieved containers in accordance with the required quantity of gas.

In succession, the input of information for identifying a user is performed at step 204, wherein the name of user or a user code is provided. A user code is required for the retrieval of specific containers in response to a user order because the specifications of the containers and the types of valve, for example, differ depending on the user. From the user name or user code input therein, accordingly, container information corresponding to the user is displayed and/or printed out to be utilized in subsequent container retrieval processing from the warehouse.

Since the information processing unit 152 on the terminal side 150 transmits a terminal ID or the like for identifying itself (automatically or as input information) when the container-related information is previously received from the host side 100, the information processing unit 152 selectively receives and stores only information relating to containers existing in the warehouse where it is disposed. Although the information processing unit 152 on the terminal side 150 may receive and store information relating to containers existing at other warehouses, it is designed to be capable of discriminating, from the stored information, information relating to its own warehouse on the basis of the terminal ID associated therewith. Accordingly, it can select containers at step 206 existing in its correlated warehouse, based on input or derived quantity, gas-identified, and user-identified information. In addition, the order of said input is optional.

On the basis of the container code and other information related thereto, the results of the container selection are displayed in a display section of the terminal side's information processing unit 152, wherein all containers selected to fulfill the user order are displayed. In a case where the number of the selected containers is larger than the demanded quantity, the system performs a selection operation to pick only the demanded quantity from the retrieved containers. The input device 154 can be used to either confirm the pick selection or can effect a manual selection of available qualified containers. In that case where the number of the selected containers is smaller than the demanded quantity, all the selected containers become immediately an object for shipment and the lack thereof will become an object for shipment after the needed containers are received from a manufacturer or another warehouse in the future. Clearly, where the number of selected containers match the quantity of gas ordered, no selection or additional ordering is necessary.

Upon selecting the specific containers from the warehouse stock to fulfill the user order, the information identifying each selected container and information identifying the user are transmitted at step 208 via the communications devices 120 - 126 to the information processing unit 110 on the host side 100, where a container code of each selected container and a user code for the user are preferably used together for the user order.

On the host side 100, the user-identified information and the container-identified information is received at step 210. Gas information is retrieved in step 212 from the container-related information in the memory device 112 on the basis of each container code. Additionally, at step 214, user-specific product label information is retrieved from the user-related information maintained in memory device 114, on the basis of each container code.

On the basis of this retrieved gas information and user-specific product label information, product labels for each container are composed at step 216. Information included for the product labels comprise the gas kind, manufacturing date, content data contained in the gas information and the issuing date, user name, and user code. The user name may be retrieved by utilizing the received user code, and further the guaranteed period of a filled gas or the required quality values may be produced on the basis of the retrieved user information. As to the number of particular product labels composed, typically at least one label is produced for each container retrieved in response to the customer order. Alternatively, one label is produced for each group or pallet of containers. In either event, the product label is preferably caused to include a container code corresponding to each container to be labeled or to be included in a grouping of containers.

After composition of the product labels, the product label information is both stored on the host side 100 in the memory device 116 at step 218 and transmitted to the terminal side 150 at step 222. The product labels are also available for printing via the output device 118 on the host side 100 at step 220.

On the terminal side 150, the transmitted product label information is received at step 224, and the received product label information is stored in the memory device 156 at step 226. Next, the product labels are output by the output device 158 at step 228. The output labels are then affixed to the retrieved gas-filled containers and shipped to the user in fulfillment of the user's order.

The product label information is received on the terminal side 150 from the host in protected or encrypted form to preclude its modification on the terminal side 150. This feature protects the integrity of the product labeling of the gas-filled containers. The processing software on the terminal side 150 is featured to decrypt the product label information for printing purposes only. Alternatively, an editing feature can be included on the terminal side 150 that can be invoked only by entry of a proper password for temporary modification of the received product label information for printing or display only and not for saving onto the received product label information.

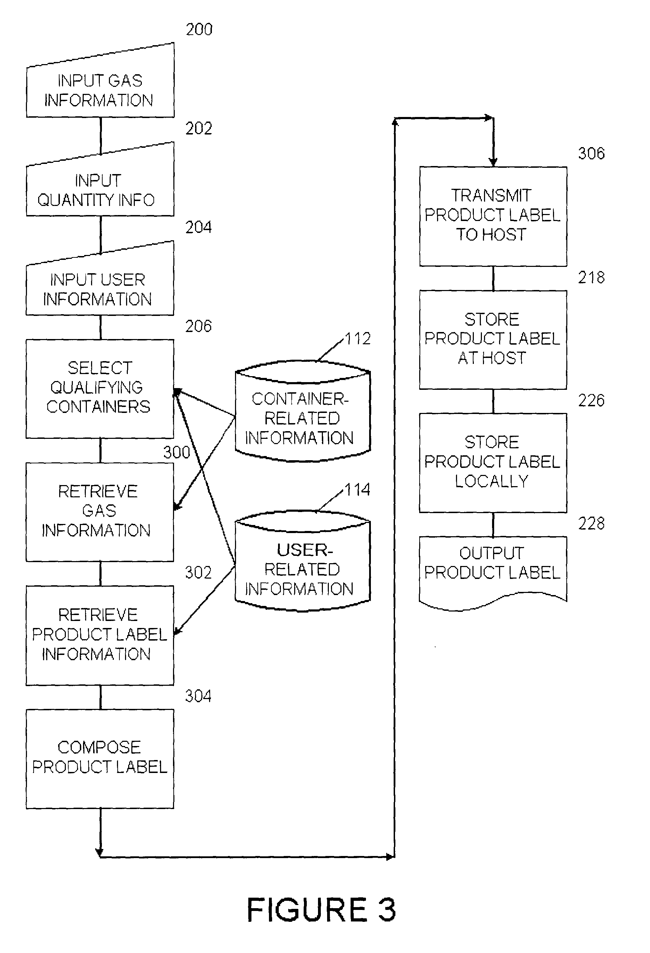

Referring now to Figure 3, there will be described an alternative embodiment of the present inventive management system. As described above, the container-related information from memory device 112 and the user-related information from memory device 114 is transmitted to the information processing unit 152 on the terminal side 150 and stored on the memory device 156; and, further, this host-supplied information is maintained with transmissions across the communication devices 120 - 126 from the host side 100. Therefore, the processing shown in Figure 2 to compose and print the container product labels can be modified within the present invention as follows. Instead of performing the selection of qualifying containers based solely on information available on the terminal side 150, the information processing unit 152 on the terminal side 150 transmits a request at step 206 of Figure 3 for container-related information and user-related information maintained on the host side in memory devices 112 and 114, respectively. In response, the information processing unit 110 on the host side 100 transmits across the communication devices 120-126 to the terminal side 150 the container-related information and the user-related information. Based on the received information, the information processing unit 152 selects at step 206 of Figure 3 those containers stocked at the warehouse proximate to the information processing unit 152 that satisfy the user's order. At steps 300 and 302 of Figure 3, the information processing unit 152 on the terminal side 150 requests of and receives from the host side 100 gas information and product label information. The information processing unit 152 on the terminal side 150 then composes the product labels for the retrieved containers at step 304. At step 306, the composed product label information is transmitted to the information processing unit 110 on the host side 100 for storage on memory device 116 at step 218. The product labels are printed on the output device 158 on the terminal side 150 based on the composed product label information, which is then stored on memory device 156.

In yet another embodiment of the present invention, and still relying on the process flow shown in Figure 3, the present management system can utilize information on the terminal side 150 and omit the need to obtain information from the host side 100. In particular, steps 206 and 302 of Figure 3 need not transmit an information request to the information processing unit 110 on the host side 100 to obtain user-related information from the memory device 114 since this information has already been transmitted across the communication devices 120 - 126 to the terminal side 150 and stored on the memory device 156. Therefore, the information processing unit 152 on the terminal side 150 can utilize user-related information from its own memory device 156 to compose the container product labels.

Similarly, in still another embodiment of the present invention, the information processing unit 152 on the terminal side 150 can obtain container-related information from its own memory device 156, thereby avoiding the need in steps 216 and 300 of Figure 3 to transmit an information request across the communication devices 120 - 126 to obtain container-related information from the memory device 112 on the host side 100.

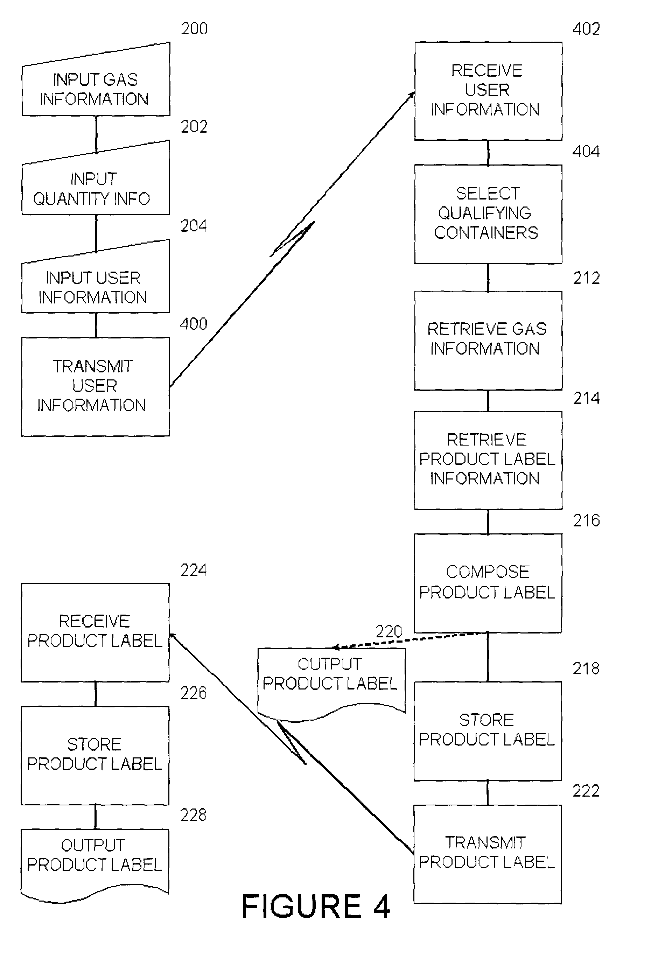

Referring now to Figure 4, another embodiment of the present inventive management method is shown. This embodiment provides for processing partially executed on the terminal side 150 and primarily executed on the host side 100, and for utilizing gas and product label information from memory storage 112 and 114 on the information processing unit 110 on the host side 100. In this embodiment, gas-filled containers stocked at the terminal side 150 are selected from a warehouse based on information transmitted from the host side 100, container product labels are composed on the host side 100 by utilizing information which has been input on the terminal side 150 and also information which has been input on the host side 100, and the container product labels are output on the terminal side 150.

At step 200 of Figure 4, information for identifying a gas which a user demands or has ordered is input through the input device 154 on the terminal side 150, wherein the kind of gas and a gas code corresponding thereto are typically input. The quantity of the gas which a user demands is input at step 202 in the form of the number of containers, the gas weight, the gas volume, etc.

The input of information for identifying a user is performed at step 204, wherein the name of user or a user code is provided. The input gas-identified information, quantity information, and user-identification information is then transmitted at step 400 to the information processing unit 110 on the host side 100 across the communication devices 120-126. Based on the information received from the terminal side 150 at step 402, the information processing unit 110 selects the gas-filled containers at step 404 that satisfy the user's order. In this embodiment, since the host side 100 is remote from the warehouse where the containers are stocked, selection in this aspect means electronically selecting qualifying containers from the information transmitted from the terminal side 150 at step 400 and received on the host side at step 402.

At step 212, gas information is retrieved from the container-related information on memory device 112; and at step 214, user-specific product label information is retrieved from the user-related information on memory device 114. At step 216, the container product labels are composed based on the retrieved gas and user-specific product label information and are stored in the memory device 116 at step 218. Optionally, the product labels can be printed on the output device 118 on the host side 100 at step 220. The composed product labels are transmitted at step 222 to the information processing unit 152 on the terminal side 150 across the communication devices 120 - 126. On the terminal side 150, at step 224, the transmitted product labels are received and are stored at step 226 in the memory device 156. At step 228, the container product labels are printed via the output device 158. The appropriate gas-filled containers are pulled from the warehouse based on the product labels received from the host side 100, the printed product labels are then affixed to the containers, and the properly-labeled containers are then shipped to the user in fulfillment of the user's order.

Although preferred embodiments of the present invention have been shown and described, it will be appreciated by those skilled in the art that changes may be made in these embodiments without departing from the principle and spirit of the invention, the scope of which is defined in the appended claims and their equivalents.

## Claims

1. A method for managing the labeling of gas-filled containers, comprising :
inputting container-related information ;
inputting user-related information ;
inputting user order information on a terminal side ;
selecting gas-filled containers satisfying the input user order;
transmitting to a host side information identifying the selected containers and information identifying the user submitting the order;
composing container labels on the host side based on the transmitted information ; and
printing container labels for each of the selected containers from the composed container labels.

2. The method according to claim 1, wherein the input container-related information includes container information, gas information, and location information.

3. The method according to claim 1 or 2, wherein the input user-related information includes user information, user-specific product label information, and user-specific container information.

4. The method according to claim 1 to 3, wherein the input user order information includes quantity information, user-identification information, and gas-identification information.

5. The method according to claim 1 to 4, wherein the step of printing further includes :
transmitting the composed container labels to the terminal side ; and
printing the container labels on the terminal side for affixing to the selected containers.

6. The method according to claim 5, wherein the step of selecting is performed on the host side based on identifying information transmitted from the terminal side.

7. The method according to claim 1 to 6, further including :
storing the composed container labels in memory on the host side ; and
storing the composed container labels in memory on the terminal side.

8. A method for managing the labeling of gas-filled containers, comprising :
inputting container-related information ;
inputting user-related information ;
inputting user order information on a terminal side;
selecting gas-filled containers satisfying the input user order;
composing container labels on the terminal side based on the input container-related information, the user-related information, and the user order information ; and
printing container labels for each of the selected containers from the composed container labels.

9. A system for managing the labeling of gas-filled containers, comprising:
a first input device inputting container-related information ;
a second input device inputting user-related information ;
a third input device inputting user order information on a terminal side ;
a first processor selecting gas-filled containers satisfying the input user order;
a communication device transmitting to a host side information identifying the selected containers and information identifying the user submitting the order;
a second processor composing container labels on the host side based on the transmitted information ; and
an output device printing container labels for each of the retrieved containers from the composed container labels.

10. The system according to claim 9, further including :
a second communications device transmitting the composed container labels to the terminal side ; and
a second output device printing the container labels on the terminal side for affixing to the selected containers.

11. The system according to claim 9 or 10, further including :
a first memory device storing the composed container labels on the host side ; and
a second memory device storing the composed container labels on the terminal side.

12. A system for managing the labeling of gas-filled containers, comprising :
a first input device inputting container-related information ;
a second input device inputting user-related information ;
a third input device inputting user order information on a terminal side ;
a first processor selecting gas-filled containers satisfying the input user order;
a second processor composing container labels on the terminal side based on the input container-related information, the user-related information, and the user order information ; and
an output device printing container labels for each of the selected containers from the composed container labels.
